# EUROPEAN PATENT SPECIFICATION

(11) **EP 2 272 342 B1**
(45) Date of publication and mention of the grant of the patent: **27.06.2012**
(21) Application number: 10180508.3
(22) Date of filing: 15.02.1994
(51) Int. Cl.: A01N 43/10, A01N 33/18

(54) **Herbicidal compositions**
Herbizide Zusammensetzung
Compositions herbicides

(30) Priority: 25.06.1993 GB 9313210; 18.02.1993 US 19386; 18.02.1993 US 19933
(43) Date of publication of application: 12.01.2011
(62) Divisional of application: 09152459.5
(73) Proprietor: BASF SE, 67056 Ludwigshafen (DE)
(72) Inventor: Fenderson, John Melvin, Kiowa, Kansas 67070 (US); O'Neal, William B., Buffalo Grove, Illinois 60089 (US); Quaghebeur, Theo, 7030, Saint-Symphorien (BE); Schumm, Karl-Christof, 13.044-230, Campinas 5 P (BR); Van Loocke, Walter, 8377, Meerkerke (BE)

(56) References cited:
- EP-A- 0 380 447
- DATABASE WPI Week 198350 Thomson Scientific, London, GB; AN 1983-841081 XP002615838, & JP 58 188804 A (NIHON TOKUSHU NOYAKU SEIZO KK) 4 November 1983 (1983-11-04) -& DATABASE EPODOC [Online] EUROPEAN PATENT OFFICE, THE HAGUE, NL; 1983, XP002615839, & JP 58 188804 A (NIHON TOKUSHU NOYAKU SEIZO KK) 4 November 1983 (1983-11-04)
- J.HARR, K. SECKINGER E. UMMEL: "san 582- a new herbicide for weed control in corn and soybeans", BRIGHTON CROP PROTECTION CONFERENCE- WEEDS, vol. 1, 1991, pages 87-92, XP000610742,

## Description

The present invention concerns a method of controlling undesired plant growth employing co-application of dimethenamid and pendimethalin, herbicidal compositions comprising dimethenamid and pendimethalin and the use of such compositions in controlling undesired plant growth.

Dimethenamid (FRONTIER^{®}) whose chemical name is 2-chloro-N-(2,4-dimethyl-3-thienyl)-N-(2-methoxy-1-methylethyl)-acetamide, processes for its production, herbicidal compositions containing it and its use as a herbicide are described in US Patent 4,666,502 the contents of which are incorporated herein by reference. Dimethenamid consists of 4 stereoisomers due to two chiral elements and can thus also exist in the form of the individual isomers as diastereomeric mixtures (1S, aRS (known as S-dimethenamid) and 1R, aRS (known as R-dimethenamid)) and as a racemic mixture (1RS, aRS). References herein to dimethenamid refer to its various forms unless otherwise stated. Of the diastereomeric mixtures S-dimethenamid is preferred.

The term herbicides, as used herein, refers to compounds which combat or control undesired plant growth. This class of compounds may be divided into sub-classes according to the primary type or mode of action the herbicide has on the plant. For example according to G.F. Warren of Purdue University, Indiana, USA, herbicides can be classified as auxin transport inhibitors, growth regulator herbicides, photosynthesis inhibitors, pigment inhibitors, growth inhibitors, amino acid synthesis inhibitors, lipid biosynthesis inhibitors, cell wall biosynthesis inhibitors, rapid cell membrane disruptors as well as "miscellaneous" herbicides which do not come under one of the preceding categories.

EP 0 380 447 discloses synergistic combinations comprising dimethenamid and methazole. According to JP58188804, combinations of a substituted phenylsulfonylurea derivative and pendimethalin produce a synergistic herbicidal effect.

It has now surprisingly been found that co-application of dimethenamid and pendimethalin results in better and in some cases longer-lasting control of undesired plant growth. This synergistic effect exhibits itself in a high degree of control at co-application rates which are significantly lower than the rate of each individual compound required to obtain the same degree of control. Furthermore, at any given co-application rate the degree of control is higher than the additive effect obtained for the individual components at the same rate. In some cases both speed of activity and level of control are enhanced and/or weeds can be controlled which are not controlled by either component at economical rates.

This synergistic effect allows for satisfactory control at reduced application rates for each component and even at levels which if applied for a particular component alone would give insufficient control. Additionally, longer residual control may be achieved.

This provides for significant economic and environmental advantages in the use of dimethenamid and the herbicide(s) used in combination therewith.

Co-application can be achieved using tank mixes of preformulated individual active ingredients, simultaneous or sequential (preferably 1-2 days) application of such formulations or application of preformulated fixed pre-mix combinations of the individual active ingredients.

The herbicide which is used in combination with dimethenamid in accordance with the invention is pendimethalin.

The present invention therefore concerns a method of combatting or controlling undesired plant growth or otherwise regulating plant growth which cromprises co-applying to a locus where such combatting or control is desired an herbicidally or plant growth regulating effective aggregate amount of dimethenamid and pendimethalin.

Application rates for co-application will of course vary depending upon climatic conditions, season, soil ecology, weeds to be combatted and the like, however, successful results can be obtained e.g. with rates of dimethenamid of 0.1 to 3.0 kg/ha, preferably 0.1 to 2.0 kg/ha, especially 0.25 to 1.5 kg/ha e.g. 0.9 to 1.5 kg/ha in co-application with rates for pendimethalin which correspond to or are significantly lower than recommended for use thereof individually.

The suitability of specific co-applications for pre- or post-emergent uses and selectively will of course depend on pendimethalin.

The activity of dimethenamid is described in the above mentioned patents and that of the herbicidal partner is described in the literature or on commercially available forms thereof (cf also CROP PROTECTION CHEMICAL REFERENCE, 9th edition (1993) Chemical & Pharmaceutical Press, NY, NY; The Pesticide Manual, 9th edition (1991), British Crop Protection Council, London; Ag Chem New Product Review, Ag Chem Information Services, Indianapolis, Indiana; Farm Chemicals Handbook, 1993 edition, Meister Publishing Company, Willoughby, Ohio and the like).

The invention also provides herbicidal or plant growth regulation compositions comprising an herbicidally effective aggregate amount of dimethenamid and pendimethalin.

Such compositions contain the active substances in association with agriculturally acceptable diluents. They may be employed in either solid or liquid forms e.g. in the form of a wettable powder or an emulsifiable concentrate, incorporating conventional diluents. Such compositions may be produced in conventional manner, e.g. by mixing the active ingredient with a diluent and optionally other formulating ingredients such as surfactants and oils.

The term diluents as used herein means any liquid or solid agriculturally acceptable material which may be added to the active constituent to provide a more easily or improved applicable form, or to achieve a usable or desirable strength of activity. Examples of diluents are talc, kaolin, diatomaceous earth, xylene, non-phytotoxic oils, or water.

Particular formulations, to be applied in spraying forms such as water dispersible concentrates or wettable powders, may contain surfactants such as wetting and dispersing agents, e.g. the condensation product of formaldehyde with naphthalene sulphonate, an alkylarylsulphonate, a lignin sulphonate, a fatty alkyl sulphate, an ethoxylated alkylphenol or an ethoxylated fatty alcohol.

In general, the formulations include from 0.01 to 90% by weight of active agent(s) and from 0 to 20% by weight of agriculturally acceptable surfactant, the active agent consisting of dimethenamid and pendimethalin. Concentrate forms of compositions generally contain between about 2 and 90%, preferably between about 5 and 80% by weight of active agent. Application forms of formulation may for example contain from 0.01 to 20% by weight of active agent.

When employing concurrent, immediately sequential or tank mix applications the herbicide partner(s) can be employed in commercially available form if appropriate and at rates equivalent to or preferably below those recommended by the manufacturer or in the references cited above. Dimethenamid can also be applied in commercially available form (e.g. as FRONTIER^{®} herbicide) or as formulated e.g. as described in the abovementioned US 4,666,502.

On co-application according to the present invention other compounds having biological activity, e.g. compounds having insecticidal or fungicidal activity, may also be included.

The preferred mode of application is tank mix prepared e.g. by adding dimethenamid to a tank containing the other herbicide partner and an appropriate surfactant or vice versa depending on the type of herbicide partner chosen. It is advisable to consult labels of mixing partners and to conduct compatibility tests prior to mixing.

Depending on the choice of co-application partners both pre- and post-emergence activity on a large range of broadleaf and grassy weeds may be achieved. Examples of such weeds are

| | |
|---|---|
| Agropyron repens | - quackgrass |
| Brachiaria platyphylla | - broadleaf signalgrass |
| Bromus spp | - e.g. downybrome |
| Cenchrus spp. | - e.g. southern sandbur, sandbur, field sandbur |
| Dactyloctenium aegyptium | - crowfootgrass |
| Digitaria spp | - e.g. crabgrass, smooth crabgrass, large crabgrass |
| Echinochloa crus-galli | - barnyardgrass |
| Eleusine indica | - goosegrass |
| Eriochioa spp | - e.g. southwestern cupgrass, prairie cupgrass, woolly cupgrass |
| Leptochloa filiformis | - red spangletop |
| Oryza sativa | - red rice |
| Panicum spp | - e.g. witchgrass and fall-, browntop- and texas-panicum, wild proso millet |
| Poa annua | - annual bluegrass |
| Setaria spp | - e.g. giant foxtail, foxtail millet, yellow foxtail, bristly foxtail, green foxtail |
| Sorghum almum | - sorghum almum |
| Sorghum bicolor | - shattercane |
| Sorghum halepense | - seedling johnson grass |
| Urochloa panicoides | - liverseedgrass |
| Acanthospermum hispidum | - bristly starbur |
| Amaranthus spp | - e.g. pigweed, tumble pigweed; smooth pigweed, redroot pigweed, prostrate pigweed, waterhemp, spiny amaranth |
| Ambrosia artemisiifolia | - common ragweed |
| Bidens pilosa | - hairy beggarticks |
| Capsella bursa-pastoris | - shepherdspurse |
| Chenopodium album | - common lambsquarters |
| Cleome monophylla | - spindlepod |
| Commelina spp | - e.g. dayflower |
| Crotalaria sphaerocarpa | - |
| Datura stranionium | - jimsonweed |
| Desmodium tortuosum | - Florida beggarweed |
| Euphorbia nutans | - Nodding spurge |
| Euphorbia maculata | - spotted surge |
| Galinsoga Parviflora | - Smallflower galinsoga |
| Ipomea spp. | - e.g. ivyleaf-, tall-, pitted momingglory |
| Lamium purpureum | - purple deadnettle |
| Matricaria chamomilla | - wild chamomile |
| Mollugo verticillata | - carpetweed |
| Papaver rhoeas | - corn poppy |
| Polygonum spp. | - e.g. smartweed, annual smartweed, wild buckwheat, prostrate knotweed |
| Portulaca oleracea | - common purslane |
| Richardia scabra | - Florida pusley |
| Schkuhria pinnata | - dwarf marigold |
| Sida spinosa | - prickly sida |
| Solanum spp. | - e.g. black nightshade, E. black nightshade, hairy nightshade, silverleaf nightshade |
| Stellaria media | - common chickweed |
| Tagetes minuta | - wild marigold (khaki weed) |
| Cyperus esculentis | - yellow nutsedge |
| Cyperus iria | - rice flatsedge |

In addition the following weeds may also be controlled when employing appropriate mixing partners.

| | |
|---|---|
| Abutilon theophrasti | - velvetleaf |
| Hibiscus trionum | - Venice mallow |
| Avena fatua | - wild oats |
| Sinapis alba | - white mustard |
| Xanthium strumarium | - common cocklebur |
| Cassia obtusifolia | - sicklepod |
| Apera spica-venti | - windgrass |
| Campsis radicans | - trumpet creeper |
| Rottboellia exaltata | - itchgrass |
| Cynodon dactylon | - bermudagrass |
| Lespedeza spp. | - e.g. lespedezas |
| Trifolium spp. | - e.g. clovers |
| Hippuris vulgaris | - marestail |
| Asclepias spp. | - e.g. milkweeds |
| Salvia spp. | - e.g. lanceleaf sage |
| Salsola iberica | - russian thistle |
| Convolvulus arvensis | - field bindweed |
| Cirsium arvense | - Canada thistle |
| Proboscidea louisianica | - devilsclaw |
| Senecio spp. | - e.g. common groundsel |
| Chorispora tennela | - blue mustard |
| Alopecurus myosuroides | - blackgrass |
| Sisymbrium altissimum | - tumble mustard |
| Caperionia palustris | - texasweed |

Crop selectivity will also usually depend upon choice of partners. Dimethenamid exhibits excellent selectivity in corn (maize), soybean and several other crops.

Examples of particular partners for co-application with dimethenamid include these selected from one or more of the types listed under a) through w) below.
a. benzoic acids, e.g. dicamba
b. picolinic acids and related compounds, e.g. picloram, triclopyr, fluroxypur, clopyralid
c. phenoxys, e.g. 2,4-D, 2,4-DB, triclopyr, MCPA, MCPP, 2,4-DP, MCPB
d. other chloracetamides, e.g. alachlor, acetochlor, metolachlor, diethatyl, propachlor, butachlor, pretilachlor, metazachlor, dimethachlor especially metolachlor, alachlor, acetochlor
e. amides, e.g. propanil, naptalam
f. carbamates, e.g. asulam
g. thiocarbamates, e.g. EPTC, butylate, cycloate, molinate, pebulate, thiobencarb, triallate, vemolate
h. nitriles, e.g. bromoxynil, ioxynil
i. ureas, e.g. diuron, thidiazuron, fluometuron, linuron, tebuthiuron, forchlorfenuron
j. triazines, e.g. atrazine, metribuzin, cyanazine, simazine, prometon, ametryn, prometryn, hexazinone
k. diphenyl ethers, e.g. acifluorfen, fomesafen, lactofen, oxyfluorfen
l. dinitroanilines, e.g. trifluralin, prodiamine, benefin, ethalfluralin, isopropalin, oxyzalin, pendimethalin
m. sulfonylureas e.g. rimsulfuron, metsulfuron, nicosulfuron, triasulfuron, primisulfuron, bensulfuron, chlorimuron, chlorsulfuron, sulfometuron, thifensulfuron, tribenuron, ethametsulfuron, triflusulfuron, clopyrasulfuron, pyrazasulfuron, prosulfuron (CGA-152005), halosulfuron, metsulfuron-methyl, chlorimuron-ethyl
n. imidazolinones, e.g. imazaquin, imazamethabenz, imazapyr, imazethapyr
o. cyclohexanediones, e.g. sethoxydim
p. aryloxyphenoxys, e.g. fluazifop
q. bipyridiliums, e.g. paraquat, diquat
r. pyridazinones, e.g. norflurazon
s. uracils, e.g. bromacil, terbacil
t. isoxazolones, e.g. clomazone
u. various, e.g. glyphosate, glufosinate, methazole, paclobutrazol, bentazon, desmedipham, phenmedipham, pyrazon, pyridate, amitrole, fluridone, DCPA, dithiopyr, pronamide, bensulide, napropamide, siduron, flumetsulam, clethodim, diclofop-methyl, fenoxaprop-ethyl, haloxyfor-methyl, quizalofop, diclobenil, isoxabenz, oxadiazon, paclobutrazol, ethofumesate, quinclorac, difenzoquat, entothall, fosamine, DSMA, MSMA
v. triketones and diones of the type described in US Patents 4,695,673; 4,869,748; 4,921,526; 5,006,150; 5,089,046, US Patent Applications 07/411,086 (and EP-A 338 992); and 07/994,048 (and EP-A 394 889 and EP-A 506 907) as well as EP-A 137 963; EP-A 186 118; EP-A 186 119, EP-A 186 120; EP-A 249 150; EP-A 336 898; the contents of each of which are incorporated herein by reference. Examples of such triketones and diones are sulcotrione (MIKADO^{®}) whose chemical designation is 2-(2-chloro-4-methanesulfonylbenzoyl)-1,3-cyclohexane dione; 2-(4-methylsulfonyloxy-2-nitrobenzoyl)-4,4,6,6-tetramethyl-1,3-cyclohexanedione; 3-(4-methylsulfonyloxy-2-nitrobenzoyl)-bicyclo[3,2,1]octane-2,4-dione; 3-(4-methylsulfonyl-2-nitrobenzoyl)-bicyclo[3,2,1]octane-2,4-dione; 4-(4-chloro-2-nitrobenzoyl)-2,6,6-trimethyl-2H-1,2-oxazine-3,5(4H,6H)dione; 4-(4-methylthio-2-nitrobenzoyl)-2,6,6-trimethyl-2H-1,2-oxazine-3,5(4H,6H)-dione; 3-(4-methylthio-2-nitrobenzoyl)-bicyclo[3,2,1]octane-2,4-dione; 4-(2-nitro-4-trifluoromethoxybenzoyl)-2,6,6-trimethyl-2H-1,2-oxazine-3,5(4H,6H)-dione.
w. Compounds of the type described in US Patent Applications 08/036,006 (and EP-A 461 079 and EP-A 549 524); EP-A 315 889; and PCT Appln. No. 91/10653 the contents of each of which are incorporated herein by reference including for example 3-[(4,6-dimethoxy-2-pyrimidinyl)hydroxymethyl]-N-methyl-2-pyridine carboxamide; 4,7-dichloro-3-(4,6-dimethoxy-2-pyrimidinyl)-3-hexanoyloxyphthalide; 3-[(4,6-dimethoxy-2-pyrimidinyl)carbonyl]-N,N-dimethyl-2-pyridine carboxamide; 3,6-dichloro-2-[(4,6-dimethoxy-2-pyrimidinyl)carbonyl]-benzoic acid; 6-chloro-2-[(4,6-dimethoxy-2-pyrimidinyl)thio]benzoic acid (a.k.a. DPX-PE350 or pyrithiobac) and salts thereof.

It will be appreciated that mixtures of dimethenamid with more than one herbicide e.g. 3-way mixes are also included within the purview of the invention.

Mixing partner is pendimethalin (e.g. as PROWL^{®}), Further examples of specific mixing partners for 3-way mix are sulcotrione (e.g. as MIKADO^{®}) and atrazine (e.g. as GESAPRIM^{®}) (Compound Group VIa).

According to the desired weed spectrum, time of application and the like other specific herbicides listed within the groups a) through w) above are also particular examples of suitable mixing partners.

### Example 1

Acitve ingredients are weighed and dissolved in a stock solution consisting of acetone: deionized water, 1:1, and 0.5% adjuvant mixture consisting of surfactants SPAN^{®} 20:TWEEN^{®} 20:TWEEN^{®} 85, 1:1:1. Dilutions from this stock solution are performed to allow for preparation of spray solutions consisting of single doses of individual or combined active ingredients. Each dose is appleid simultaneously via a linear track sprayer set to deliver 600 liters/ha spray volume to both the foliage of the selected weed seedling species, postemergence application, and the surface of soil that had been previously sown with seeds, preemergence application. The seedlings used are cultured to develop plants at the two- to early three-leaf stage. The stage of development of each seedling at application time is recorded. After application, the treated plants are transferred to the greenhouse and held until termination of the experiment within four weeks. Symptoms of injury are recorded two and ten days after postemergence application and fourteen days after preemergence application. Visual percentage ratings of crop injury and weed control are taken ten and twenty-eight days after postemergence application and fourteen and twenty-eight days after preemergence application.

Co-application of dimethenamid with other specific active ingredients such as outlined above produces improved herbicidal effects compared with application of each active ingredient alone.

### Example 2 (comparative example, not forming part of the invention)

A field trial is carried out employing FRONTIER^{®} 7.5 EC and ACCENT^{®} 75 WDG in control of large crabgrass in corn. Application is as tankmix combination at early post-emergence of the weeds (3 and 4 leaf stages). Application rates of a.i. are 1.5 and 0.75 kg/ha for dimethenamid and 37.2 and 19.2 g/ha for nicosulfuron. Combined application of 0.75 kg/ha of dimethenamid and 19.2 g/ha of nicosulfuron gave 85% control with negligible corn damage compared with 35% of nicosulfuron applied alone at 19.2 g/ha and 72% for dimethenamid at a higher rate of 1.25 g/ha. Combined application at the higher rate of dimethenamid with 37.2 g/ha of nicosulfuron gave an even more dramatic effect with 95% control compared with 72% for dimethenamid and only 45% for nicosulfuron each alone.

### Example 3 (comparative example, not forming part of the invention)

Small field units in a maize field, infested with echinochloa crus galli and solanum nigrum are sprayed with a tank-mix suspension of dimethenamid and sulcotrione. The stage of the weeds is "full tillering" for echinochloa crus galli and "8-leaves stage" for solanum nigrum. The lot size is 8 meters in length and 3 meters in broadth. The application rates are 1.1 kg/ha of dimethenamid and 0.15 kg/ha of sulcotrione. Seven days after treatment the efficacy is evaluated, both as control of the weeds and as tolerance of the crop plants.

In this test the control of echinochloa was between 93 and 98%, and the control of solanum was between 91 and 93% in three repetitions, while the damage of the maize plants was always below 10%.

### Example 4 (comparative example, not forming part of the invention)

Small field units in a maize field, infested with echinochloa crus galli, solanum nigrum and chenopodium album are sprayed with a tank-mix suspension of dimethenamid, sulcotrione and atrazine. The stage of the weeds is "full tillering" of echinochloa and "6-8 leaves stage" for solanum and chenopodium. The lot size is 8 meters in length and 3 meters in broadth. The application rates are 1.08 kg/ha of dimethenamid, 150 or 210 g/ha of sulcotrione and 750 g/ha of atrazine. 14 days after treatment the efficacy is evaluated.

The results (in percentage control) were as follows:

| Compound a.i./ha | Echinochloa control | expected additive effect | synergistic effect |
|---|---|---|---|
| Atrazine 1500 | 23 | - | |
| Dimethenamid/Atrazine 1080/750 | 30 | - | |
| Sulcotrione/Atrazine 150/750 | 26 | - | |
| Sulcotrione/Atrazine 210/750 | 33 | - | |
| Dimethenamid/Sulcotrione/Atrazine 1080/150/750 | 95 | 56 | + 39 |
| Dimethenamid/Sulcotrione/Atrazine 1080/210/750 | 97 | 59 | + 42 |
| | Solanum/Chenopodium | | |
| Atrazine 1500 | 16 | - | |
| Dimethenamid/Atrazine 1080/750 | 36 | - | |
| Sulcotrione/Atrazine 150/50 | 23 | - | |
| Sulcotrione/Atrazine 210/750 | 53 | - | |
| Dimethenamid/Sulcotrione/Atrazine 1080/150/750 | 97 | 53 | + 44 |
| Dimethenamid/Sulcotrione/Atrazine 1080/210/750 | 100 | 89 | + 11 |

The synergic effect is clearly visible at the lower rates of sulcotrione, resulting in a nearly doubled degree of control, compared to the expected additive efficacies. For the higher rates of sulcotrione, (> 300 g/ha) only the additive effect remains visible since the total control is 100%.

### Example 5 (comparative example, not forming part of the invention)

A field trial is carried out on plots (2 x 20 m) planted with sugar cane and infested with cyperus rotundus in the first or second growing stage and sprayed with a backpack sprayer in different concentrations in a tank mix. The amount of liquid spray broth is 400 I/ha.

The application rates are 2.7 kg/ha of dimethenamid with 60 g/ha of chlorimuron or with 1.6 kg/ha of a fixed ratio mixture of chlorimuron and diuron (1 : 19) which is commercially available as FRONT^{®}. Visual evaluation is done 30 or 60 days after treatment (DAT) in percentage of control. The expected additive effect value is calculated according to the method of Colby:

| Compound a.i./ha conditions | Cyperus Control (DAT) | expected additive effect | synergistic effect |
|---|---|---|---|
| light to medium soil | | | |
| Dimethenamid 2.7 kg | 19 (60 DAT) | - | |
| Chlorimuron/Diuron 1.6 kg | 45 (60 DAT) | - | |
| Dimethenamid/Chlorimuron /Diuron 2.7 + 1.6 kg | 76 (60 DAT) | 55 | + 21 |
| heavy soil | | | |
| Dimethenamid 2.7 kg | 10 (60 DAT) | - | |
| Chlorimuron/Diuron 1.6 kg | 37 (60 DAT) | - | |
| Dimethenamid/Chlorimuron /Diuron 2.7 + 1.6 kg | 74 (60 DAT) | 43 | + 31 |
| light to medium soil | | | |
| Dimethenamid 2.25 kg | 23 (30 DAT) | - | |
| Chlorimuron/Diuron 1.2 kg | 48 (30 DAT) | - | |
| Dimethenamid/Chlorimuron /Diuron 2.25 + 1.2 kg | 80 (30 DAT) | 60 | + 20 |
| light to medium soil | | | |
| Dimethenamid 2.7 kg | 27 (30 DAT) | - | |
| Chlorimuron/Diuron 1.2 kg | 48 (30 DAT) | - | |
| Dimethenamid/Chlorimuron /Diuron 2.7 + 1.2 kg | 88 (30 DAT) | 62 | + 26 |
| light to medium soil | | | |
| Dimethenamid 2.7 kg | 27 (30 DAT) | - | |
| Chlorimuron 0.06 kg | 58 (30 DAT) | - | |
| Dimethenamid/Chlorimuron 2.7 + 0.06 kg | 93 (30 DAT) | 69 | + 24 |

The achieved results indicate that synergistic effects are obtained with the 2-way mix (dimethenamid/chlorimurion), as well as with the 3-way mix (dimethenamid/chlorimuron/diuron).

## Claims

1. A method of controlling undesired plant growth which comprises co-application to the locus of said undesired plants growth dimethenamid and pendimethalin in a herbicidally effective aggregate amount.

2. A method according to claim 1 wherein the amount of dimethenamid is from 0.1 to 3.0 kg/ha, preferably 0.25 to 1.5 kg/ha.

3. A herbicidal composition comprising a herbicidally effective aggregate amount of dimethenamid and pendimethalin and an agriculturally acceptable carrier.

4. A composition according to claim 3, **characterized in that** it contains dimethenamid and pendimethalin in a quantity producing a synergistic herbicidal effect.

## Patentansprüche

1. Verfahren zur Bekämpfung von unerwünschtem Pflanzenwuchs, **dadurch gekennzeichnet, daß** man auf den Ort des unerwünschten Pflanzenwuchses Dimethenamid und Pendimethalin gemeinsam in einer herbizidwirksamen Gesamtmenge ausbringt.

2. Verfahren nach Anspruch 1, wobei die Dimethenamidmenge 0,1 bis 3,0 kg/ha, vorzugsweise 0,25 bis 1,5 kg/ha beträgt.

3. Herbizide Zusammensetzung, die eine herbizidwirksame Gesamtmenge an Dimethenamid und Pendimethalin und einen landwirtschaftlich annehmbaren Träger umfaßt.

4. Zusammensetzung nach Anspruch 3, **dadurch gekennzeichnet, daß** sie Dimethanamid und Pendimethalin in solch einer Menge enthält, daß eine synergistische herbizide Wirkung erzeugt wird.

## Revendications

1. Procédé de contrôle de la croissance de plantes non désirées, qui comprend à l'emplacement de ladite croissance de plantes non désirées, l'application commune de diméthénamide et de pendiméthaline en une quantité en agrégat efficace du point de vue herbicide.

2. Procédé suivant la revendication 1, dans lequel la quantité de diméthénamide est de 0,1 à 3,0 kg/ha, de préférence de 0,25 à 1,5 kg/ha.

3. Composition herbicide comprenant une quantité en agrégat efficace du point de vue herbicide de diméthénamide et de pendiméthaline et un support acceptable en agriculture.

4. Composition suivant la revendication 3, **caractérisée en ce qu'**elle contient du diméthénamide et de la pendiméthaline en une quantité produisant un effet herbicide synergique.
